# EUROPÄISCHE PATENTANMELDUNG

(11) **EP 1 437 264 A1**
(43) Veröffentlichungstag der Anmeldung: **14.07.2004**
(21) Anmeldenummer: 03023202.9
(22) Anmeldetag: 13.10.2003
(51) Int. Cl.: B60R 16/02

(54) **Schutzvorrichtung für langgestreckte Gegenstände**

(30) Priorität: 13.01.2003 DE 10300921
(71) Anmelder: Verta AG, 9004 St. Gallen (CH)
(72) Erfinder: Lindner, Michael, 83026 Rosenheim (DE)
(74) Vertreter: Naefe, Jan Robert

(57) **Zusammenfassung**

Die Erfindung betrifft eine Schutzvorrichtung für langgestreckte Gegenstände, insbesondere eine Schutzvorrichtung für elektrische Leitungen, Fluidleitungen und dergleichen in Kraftfahrzeugen, mit einem Wellrohr (1) zur Aufnahme des langgestreckten Gegenstandes, einer außenseitig auf dem Wellrohr (1) angeordneten textile Schicht (3) sowie eine außerhalb der textilen Schicht (3) außenseitig vorhandenen Metallschicht (5).

## Beschreibung

Die Erfindung betrifft eine Schutzvorrichtung für langgestreckte Gegenstände und insbesondere eine Schutzvorrichtung für elektrische Leitungen, Fluid-Leitungen und dergleichen in Kraftfahrzeugen nach dem Oberbegriff des Anspruchs 1.

Aus der WO 01/84685 A1 ist eine Wärmeschutzvorrichtung für von außen zonal wärmebeaufschlagte langgestreckte Körper, z. B. für Leitungen in einem Kraftfahrzeug bekannt, welche zumindest eine erste innere, dem Körper zugewandte wärmebeständige Schutzschicht sowie ein die zonal auftretende Wärme ableitendes und großflächig verteilendes Mittel besitzt.

Aus der WO 99/04194 ist ein hitzeschützendes Element zum Schutz von langgestreckten Gegenständen offenbart, wobei das Element eine erste Schicht aus einem isolierenden Material mit einer äußeren reflektierenden Schicht umfasst. Gegenüberliegende Kanten des ersten Elements besitzen Elemente zum Verbinden desselben in Überlappung, um eine röhrenartiges Element zu bilden. Eine zweite isolierende Bahn ist an der äußeren Oberfläche innenseitig der Kanten angeordnet. Die zweite Bahn besitzt ebenso eine reflektierende Schicht an ihrer äußeren Oberfläche und ist an der ersten Bahn oder Schicht entlang der Kanten befestigt, wodurch Lufttaschen zwischen den Bahnen gebildet werden. Ein steifer Monofilament-Draht, welcher in Spiralform vorliegt, ist innerhalb dieser Lufttasche angeordnet, um den taschenartigen Aufbau weiter zu gewährleisten. Bei dieser bekannten Vorrichtung ist von Nachteil, dass sie sehr aufwendig herzustellen ist und bei mechanischer Belastung leicht aus der Form gerät.

Aus der WO 98/30830 ist eine Isoliereinrichtung zu Isolierung von Hitze erzeugenden Komponenten wie Abgasrückführleitungen bekannt, welche eine äußere Schicht aus einem gestrickten Glasfasergarn umfasst. Ein Metalldrahtskelett ist vorhanden, um der Schicht eine röhrenartige Form zu verleihen, wobei eine weitere Schicht eines wärmeisolierenden mineralischen Papiers vorhanden ist, welches von der Deckschicht durch die Metalldrähte getrennt ist. Auch bei dieser Vorrichtung ist von Nachteil, dass sie besonders aufwendig in der Herstellung ist.

Aus der WO 97/29316 ist eine isolierende Lage zur thermischen Isolation von röhrenartigen Wärmequellen bekannt, wobei gestrickte Trennlagen vorhanden sind, zwischen denen ein metallische Folie angeordnet ist, welche von einer Hitzequelle durch eine gestrickte Lage getrennt ist. Der Gesamtaufbau dieser Schicht besteht aus einer Folie, welche an der Wärmequelle anliegt, darauf eine innere gestrickte Edelstahlfaserlage, darauf ein feuerfestes Papier, eine zweite gestrickte Lage aus einer Edelstahlfaser und darauf eine Deckschicht. Auch bei dieser Ausführungsform ist diese aufwendige Herstellung von Nachteil.

Es ist bekannt, längliche bzw. langgestreckte Körper, z. B. elektrische Leitungen oder Fluid-Leitungen, wie Hydraulik- oder Pneumatik-Leitungen bzw. Pneumatik-Schläuche zum Schutz vor mechanischen und/oder thermischen Einflüssen, insbesondere zum Schutz vor Wärme und Abrieb gegen Scheuern z. B. mit Kunststoff-Wellrohren zu ummanteln. Es ist ferner bekannt, derartige langgestreckte Körper zum Schutz gegen Schäden bei einer Verunfallung des Fahrzeuges, insbesondere Schäden durch Quetschung oder Scherung, entsprechend zu schützen.

Übliche Wellrohre bestehen aus Polypropen oder Polyamid und weisen eine nur begrenzte thermische Belastbarkeit auf, sodass elektrische Leitungen, Schläuche oder dergleichen, welche beispielsweise in Fahrzeugen in der Nähe von Wärmequellen, z. B. in der Nähe des Motors, eines Turboladers, einer Abgasanlage, Abgasrückführungsleitungen oder dergleichen verlegt sind, durch solche Wellrohre nicht ausreichend vor beschädigender Wärme geschützt sind.

Zur Lösung dieses Problems ist es bekannt, hochtemperaturfeste Wellrohre, z. B. aus Teflon, zu verwenden oder die Isolierungen der Leiterdrähte hochtemperaturfest, z. B. aus einem Silikon- oder Teflonmaterial, auszubilden. Derartige hochtemperaturfeste Kabelisolierungen sind jedoch sehr teuer. Ebenso ist es bekannt, Glasseidenschläuche mit einer Silikonummantelung auszubilden.

Weiterhin ist es bekannt, Wellrohre aus Polytetrafluorethen in Hitze beaufschlagten Bereichen um Kabelbäume herum anzuordnen. Hierbei ist jedoch von Nachteil, dass eine Dauertemperaturbeständigkeit dieser Polytetrafluorethen-Wellrohre nur bis ca. 260 °C gewährleistet ist, wobei der Schmelzpunkt bei 310°C liegt, sodass Stauwärme, die oft über 300 °C liegt, nicht verkraftet wird.

Ferner ist es bekannt, Glasseidenschläuche mit einer Aluminiumfolie zu kaschieren, um die thermische Beständigkeit der Glasseidenschläuche zu verbessern. Es konnte jedoch festgestellt werden, dass bei einer in Motorenräumen üblichen Verschmutzung der Aluminiumfolie, welche auf den Glasseidenschläuche aufliegt, die thermische Isolierung nicht mehr besteht und punktuell Wärme in das Glasseidenschläuche eingetragen wird, was in diesem Bereich zu einer unerwünschten Wärmedurchleitung zum zu schützenden Gegenstand hin führt. Ferner sind derart beschichtete Glasseidenschläuche bzw. die Beschichtung selber sehr stark anfällig für Beschädigungen bei einer reibenden Belastung.

Aufgabe der Erfindung ist es, eine Schutzvorrichtung für langgestreckte Gegenstände zu schaffen, welche bei hoher Stabilität und Schlagzähigkeit eine ausreichende thermische Isolierung besitzt, welche zudem eine hinreichende Abriebbeständigkeit aufweist.

Die Aufgabe wird mit einer Schutzvorrichtung für langgestreckte Gegenstände mit den Merkmalen des Anspruchs 1 gelöst.

Vorteilhafte Weiterbildungen sind in Unteransprüchen ausgeführt.

Erfindungsgemäß wird ein Wellrohr mit einem Glasseidenschlauch umflochten oder umstrickt oder mit einem solchen Glasseidenschlauch überzogen, wobei der Glasseidenschlauch teilbereichsweise beispielsweise über eine Klebung mit dem Wellrohr verbunden ist. Außenseitig ist auf den Glasseidenschlauch eine Aluminiumschicht, insbesondere eine Aluminiumfolien-Kaschierung, aufgebracht. Es hat sich überraschenderweise herausgestellt, dass die Vorteile des Wellrohres, nämlich Biegesteifigkeit, geringer Knickneigung und hohe Schlagzähigkeit, hierbei voll erhalten bleiben, wobei eine sehr gute thermische Isolierung bzw. ein sehr guter thermischer Schutz des Wellrohres erreicht wird. Ferner wird durch die erfindungsgemäße Anordnung ein hoher Abriebschutz erreicht, wobei auch die äußere an sich empfindliche Aluminiumschicht Reibbelastungen hervorragend widersteht. Es konnte ferner überraschend herausgefunden werden, dass auch bei einer Beschmutzung der Aluminiumschicht das Wellrohr nicht negativ verändert wird. Dies wird auf ein thermisches Zusammenwirken der Aluminiumfolie mit dem Glasseidenschlauch einerseits und einem durch das Wellrohr gebildeten Luftpolster andererseits zurückgeführt.

Die erfindungsgemäße Anordnung vermag gegenüber einem Glasseidenschlauch, der mit Aluminium kaschiert wurde, alleine eine Temperaturreduktion von außen nach innen zu erreichen, die je um ca. 40-50 % höher ist als bei bekannten Schutzvorrichtungen. Diese Wärmeisolations- bzw. Abschirmleistung ist so hoch, dass in Wärme-beaufschlagten Bereichen auf die Verwendung von mit temperaturfesten Isolierungen versehenen elektrischen Leitungen verzichtet werden kann und anstelle dieser Leitungen handelsübliche, mit PVC isolierte Leitungen verwendet werden können.

Zudem ist von Vorteil, dass die einzelnen Komponenten der Schutzvorrichtung günstig sind und sich auch in einfacher, schneller und sicherer Weise zusammenfügen lassen.

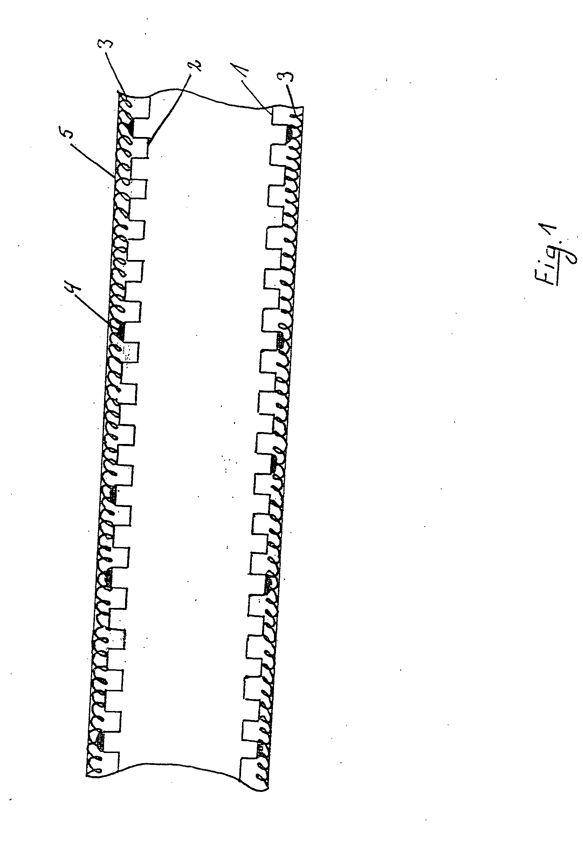

Die Erfindung wird beispielhaft anhand einer Zeichnung erläutert. Die einzige Figur zeigt eine erfindungsgemäße Schutzvorrichtung für langgestreckte Gegenstände in einem Längsschnitt.

Die erfindungsgemäße Schutzvorrichtung für langgestreckte Gegenstände umfasst ein länglich zylindrisches Wellrohr 1. Derartige Wellrohre 1 sind in regelmäßigen Abständen mit Einschnürungen 2 derart versehen, dass sich von außen eine entlang einer Längsrichtung gerippte Struktur aus radialen Rippen ergibt. Das Wellrohr 1 besteht beispielsweise aus Polypropen, Polyamid-6, Polytetrafluorethen (PTFE) oder anderen Kunststoffen ggf. auch Metallen wie Aluminium. Das Wellrohr 1 dient der Aufnahme des langgestreckten Gegenstands und insbesondere elektrischer Leitungen, Fluidleitungen und dergleichen in Kraftfahrzeugen.

Außenseitig um das Wellrohr 1 herum ist eine textile Schicht 3 angeordnet. Die textile Schicht 3 besteht aus einem geflochtenen, gewirkten, gewebten, gestrickten, oder matten- und/oder streifenförmig um das Wellrohr 1 gelegten Textil. Insbesondere aus einer gestrickten oder geflochtenen Glasseide. Um die textile Schicht 3 an dem Wellrohr 1 zu fixieren, kann an dem Wellrohr 1 in regelmäßigen oder unregelmäßigen Abständen Klebstoff, insbesondere in Form von Klebepunkten 4, vorhanden sein. Der Abstand der Klebepunkte 4 zueinander kann dabei so gewählt sein, dass die textile Schicht 3 zwischen den Klebepunkten 4 in der Lage ist, von außen aufgebrachte Spannungen zur Lageänderung abzubauen. Bevorzugt besteht die textile Schicht 3 aus einer gestrickten Glasseide. Ferner kann anstelle von Glasseide auch Polyester, Polyamid, Aramide und weitere mögliche Fasern verwendet werden. Ferner können sowohl Monoals auch Multifilamente verwendet werden, wobei ein verkraftbares Temperaturmaximum von 400 °C angestrebt wird. Bei der Verwendung von Glasseide können die verschiedensten Glasarten verwendet werden, bevorzugt ist so genanntes E-Glas.

Erfindungsgemäß kann die textile Schicht 3 zudem mit Imprägnierungen jedweder Art, beispielsweise durch Silikonöl oder Ähnliches, konditioniert sein. Zudem können die die textile Schicht 3 ausbildenden Fasern einzeln mit Beschichtungen, beispielsweise zur Verringerung der Reibung, zur Erhöhung des Reflektionsvermögens oder der Oberflächengüte oder dergleichen versehen sein. Insbesondere können die Fasern mit einer Metallbedampfung ausgebildet sein.

Ferner umfasst die erfindungsgemäße Schutzvorrichtung für langgestreckte Gegenstände außenseitig eine äußere Schicht 5 aus einer Metallfolie. Als Material für die Metallfolie kann grundsätzlich jedes metallische Folienmaterial verwendet werden. Es ist ferner möglich, eine Laminatfolie aus mehreren Metallschichten ggf. auch unterschiedlicher Metalle zu verwenden, wenn ein gesteigertes Reflexionsverhalten nötig ist. Bevorzugt wird die äußere Schicht 5 aus Aluminiumfolie, insbesondere einer Aluminiumfolie mit einer hochglänzenden Außenseite ausgebildet, deren dicke z.B. 20µm-30µm beträgt.

Besonders bevorzugt ist die äußere Schicht 5 als metall-, inbesondere aluminiumbedampfte PET-Folie ausgebildet, welche eine besonders hohe Abrieb- und Reißfestigkeit aufweist. Die metallbedampfte Schicht ist bei dieser Ausführungsform nach außen gewandt angeordnet.

Um das Geflecht bzw. die textile Schicht 3 auf das Wellrohr 1 aufzubringen, kann das Wellrohr 1 in einer entsprechenden Rundstrickmaschine kontinuierlich mit der textilen Schicht 3 umstrickt werden, wobei ein vorgeordneter Klebstoffauftrag punkt- oder flächenförmig auf das Wellrohr 2 stattfindet, sodass das aufgestrickte Material an das Wellrohr 2 angeklebt wird. Anschließend findet die Umwicklung der textilen Schicht 3 mit der Folie statt, wobei abhängig von der Steigung bei der Umwicklung mit der Folie unterschiedliche Überlappungsbreiten der Folie auf die darunterliegende Schicht realisiert werden können, bis hin zu einer mehrschichtigen Folienlage.

Es ist auch möglich, einen Textilschlauch auf das Wellrohr 2 aufzuziehen und beispielsweise endseitig aneinander zu fixieren.

Ferner kann anstelle einer Folie eine oder mehrere Metallschichten auf die textile Schicht aufgedampft werden.

## Patentansprüche

1. Schutzvorrichtung für langgestreckte Gegenstände, insbesondere Schutzvorrichtung für elektrische Leitungen, Fluidleitungen und dergleichen in Kraftfahrzeugen, **gekennzeichnet durch**
ein Wellrohr (1) zur Aufnahme des langgestreckten Gegenstandes,
eine außenseitig auf dem Wellrohr (1) angeordnete textile Schicht (3) sowie eine radial außerhalb der textilen Schicht (3) angeordnete Metallschicht (5).

2. Vorrichtung nach Anspruch 1, **dadurch gekennzeichnet, dass** das Wellrohr (1) aus einem Polyamid und/oder Polyolefin und/oder Polyester und/oder Aramid und/oder anderen Kunststoffen und/oder Kunststofflaminaten und/oder armierten Kunststoffen oder Kunststofflaminaten und/oder Metall ausgebildet ist.

3. Vorrichtung nach Anspruch 1 und/oder 2, **dadurch gekennzeichnet, dass** die textile Schicht (3) ein Flecht-, Strick-, Vlies-, oder Webschlauch ist.

4. Vorrichtung nach einem oder mehreren der vorhergehenden Ansprüche, **dadurch gekennzeichnet, dass** die textile Schicht (3) aus einer Glasseide, einem Polyesterfilament, einem Polyamidfilament, einem Teflon- oder Aramidfilament ausgebildet ist.

5. Vorrichtung nach einem oder mehreren der vorhergehenden Ansprüche, **dadurch gekennzeichnet, dass** die textile Schicht (3) aus einem Monofilament oder Multifilament ausgebildet ist.

6. Vorrichtung nach einem oder mehreren der vorhergehenden Ansprüche, **dadurch gekennzeichnet, dass** die textile Schicht (3) auf das Wellrohr (1) aufgeklebt ist.

7. Vorrichtung nach einem oder mehreren der vorhergehenden Ansprüche, **dadurch gekennzeichnet, dass** zwischen dem Wellrohr und der textilen Schicht zum Aufkleben der textilen Schicht (3) auf das Wellrohr (1) Klebstoffpunkte oder Klebstoffflächen vorhanden sind.

8. Vorrichtung nach einem oder mehreren der vorhergehenden Ansprüche, **dadurch gekennzeichnet, dass** der Klebstoff schraubengang- oder spiralförmig auf der Oberfläche des Wellrohres (1) vorhanden ist.

9. Vorrichtung nach einem oder mehreren der vorhergehenden Ansprüche, **dadurch gekennzeichnet, dass** das die textile Schicht (3) ausbildende Filament ein beschichtetes und/oder ummanteltes Filament ist.

10. Vorrichtung nach einem oder mehreren der vorhergehenden Ansprüche, **dadurch gekennzeichnet, dass** das Filament mit einem Kunststoff, einem Wachs, einer Flüssigkeit, einem Öl oder einem Metall beschichtet und/oder ummantelt ist.

11. Vorrichtung nach einem oder mehreren der vorhergehenden Ansprüche, **dadurch gekennzeichnet, dass** das Filament mit einem Metall bedampft ist.

12. Vorrichtung nach einem oder mehreren der vorhergehenden Ansprüche, **dadurch gekennzeichnet, dass** die äußere Metallschicht 5 aus Metallfolienbahnen ausgebildet wird, welche schraubengangartig oder spiralförmig auf die textile Schicht (3) aufgewickelt sind.

13. Vorrichtung nach einem oder mehreren der vorhergehenden Ansprüche, **dadurch gekennzeichnet, dass** die Folienbahnen mit einer Überlappung aufwickelt sind.

14. Vorrichtung nach einem oder mehreren der vorhergehenden Ansprüche, **dadurch gekennzeichnet, dass** die Folienbahnen derart auf die textile Schicht (3) aufgewickelt sind, dass durch die Überlappung ein zwei- oder mehrschichtiger Aufbau der Metallfolie ausgebildet ist.

15. Vorrichtung nach einem oder mehreren der vorhergehenden Ansprüche, **dadurch gekennzeichnet, dass** die Metallfolie mehrschichtig aus aufeinanderliegenden Folien eines oder mehrerer Metalle ausgebildet ist.

16. Vorrichtung nach einem oder mehreren der vorhergehenden Ansprüche, **dadurch gekennzeichnet, dass** die außenliegende Metallschicht (5) aus einer oder mehreren Metallbedampfungen und/oder aufgalvanisierten Metallschichten, welche insbesondere auf einem Trägermaterial angeordnet sind, ausgebildet ist.

17. Vorrichtung nach einem oder mehreren der vorhergehenden Ansprüche, **dadurch gekennzeichnet, dass** die äußere Schicht (5) als metall-, insbesondere aluminiumbedampfte PET-Folie ausgebildet ist.
